# EUROPEAN PATENT APPLICATION

(11) **EP 2 175 658 A1**
(43) Date of publication of application: **14.04.2010**
(21) Application number: 09011775.5
(22) Date of filing: 15.09.2009
(51) Int. Cl.: H04N 9/64, H04N 9/68, H04N 5/14

(54) **Method and system for scene adaptive dynamic 3-D color management**

(30) Priority: 23.09.2008 US 99352 P; 20.03.2009 US 408490
(71) Applicant: Broadcom Corporation, Irvine, CA 92617 (US)
(72) Inventor: Ikizyan, Ike, 92657 Newport Coast, CA (US)
(74) Representative: Jehle, Volker Armin

(57) **Abstract**

A video processing system may determine a scene in an image and may adaptively adjust one or more of three dimensional color components of the image based on the determined scene. The three dimensional color components may comprise luma, hue and/or saturation. Statistics for the three dimensional color components may be collected and utilized to determine content and/or scene type within the image. Embedded textual information may also be utilized. Configuration parameters for processing the image may be adapted based on the statistics and/or the knowledge of the content and/or scene type. Hues, saturation levels and/or luma levels may be adjusted based on the statistics, scene type and/or content. The three dimensional color components may be dynamically adapted for at least a portion of the image. The statistics may comprise distributions of saturation over hue and/or luma, distributions of hue over saturation and/or luma, and/or distributions of luma.

## Description

### CROSS-REFERENCE TO RELATED APPLICATIONS/INCORPORATION BY REFERENCE

This application makes reference to, claims priority to, and claims the benefit of United States Provisional Application Serial No. 61/099,352, filed on September 23, 2008, entitled "METHOD AND SYSTEM FOR SCENE ADAPTIVE DYNAMIC 3-D COLOR MANAGEMENT SYSTEM," which is hereby incorporated herein by reference in its entirety.

### FIELD OF THE INVENTION

Certain embodiments of the invention relate to data processing. More specifically, certain embodiments of the invention relate to a method and system for scene adaptive dynamic 3-D color management.

### BACKGROUND OF THE INVENTION

In modern televisions and monitors, several static techniques exist for improving the appearance of colors. Most of these controls are described as static because they do not automatically adapt to source content. Static controls may be based on user input. Typical displays comprise static controls for contrast, brightness, hue (or "tint"), and saturation. Televisions and monitors sometimes also include individual gain and offset controls for red, green, and blue channels to allow changes in white balance or color temperature. They may also include controls for gamma. Color processors responding to static control may boost the saturation of certain colors. One example is to boost the saturation of green colors to enhance the appearance of grass and foliage. Also, blue colors may be enhanced to improve the appearance of the sky.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for scene adaptive dynamic 3-D color management, substantially as shown in and/or described in connection with at least one of the figures, as set forth more completely in the claims.
According to an aspect, a method for processing video data comprises:
in a video processing system:
   determining a scene associated with a static or a moving image; and
   adaptively adjusting one or more three dimensional color components of
said static or said moving image based on said determination.

Advantageously, said three dimensional color components comprises luma, hue and/or saturation components.

Advantageously, the method further comprises collecting three dimensional color components statistics for at least a portion of said static or moving image.

Advantageously, the method further comprises determining source content and/or scene type for at least a portion of said static or moving image based on said collected three dimensional color components statistics.

Advantageously, the method further comprises determining source content and/or scene type for at least a portion of said static or moving image based on coded and/or textual information embedded in said static or moving image.

Advantageously, the method further comprises adapting configuration parameters for processing at least a portion of said static or moving image based on one or more three dimensional color components statistics collected for said static or moving image.

Advantageously, the method further comprises adapting configuration parameters for processing at least a portion of said static or moving image based on knowledge of scene type and/or source content of said static or moving image.

Advantageously, the method further comprises one or more of:
adjusting individual hues or ranges of hues for at least a portion of said static or moving image based on one or more three dimensional color components statistics, scene type and/or source content;
adjusting individual saturation levels or ranges of saturation levels for at least a portion of said static or moving image based on one or more three dimensional color components statistics, scene type and/or source content; and
adjusting individual luma levels or ranges of luma levels for at least a portion of said static or moving image based on one or more three dimensional color components statistics, scene type and/or source content.

Advantageously, the method further comprises dynamically adapting one or more of the said three dimensional color components of at least a portion of said static or moving image.

Advantageously, the method further comprises one or more of:
determining a distribution of saturation levels for a specified hue and/or range of hues spanning a range of one or more luma levels within all of and/or a portion of said static and/or moving image;
determining a distribution of hues for a specified saturation level and/or range of saturation levels spanning a range of one or more luma levels within all of and/or a portion of said static and/or moving image; and
determining a distribution of luma levels within all of and/or a portion of said static and/or moving image.

According to an aspect, a system for processing video data comprises:
one or more processors for use in a video processing system, wherein said one or more processors is operable to:
   determine a scene associated with a static or a moving image; and
   adaptively adjust one or more three dimensional color components of said static or said moving image based on said determination.

Advantageously, said three dimensional color components comprises luma, hue and/or saturation components.

Advantageously, said one or more processors is operable to collect three dimensional color components statistics for at least a portion of said static or moving image.

Advantageously, said one or more processors is operable to determine source content and/or scene type for at least a portion of said static or moving image based on said collected three dimensional color components statistics.

Advantageously, said one or more processors is operable to determine source content and/or scene type for at least a portion of said static or moving image based on coded and/or textual information embedded in said static or moving image.

Advantageously, said one or more processors is operable to adapt configuration parameters for processing at least a portion of said static or moving image based on one or more three dimensional color components statistics collected for said static or moving image.

Advantageously, said one or more processors is operable to adapt configuration parameters for processing at least a portion of said static or moving image based on knowledge of scene type and/or source content of said static or moving image.

Advantageously, said one or more processors is operable to, one or more of:
adjust individual hues or ranges of hues for at least a portion of said static or moving image based on one or more three dimensional color components statistics, scene type and/or source content;
adjust individual saturation levels or ranges of saturation levels for at least a portion of said static or moving image based on one or more three dimensional color components statistics, scene type and/or source content; and
adjust individual luma levels or ranges of luma levels for at least a portion of said static or moving image based on one or more three dimensional color components statistics, scene type and/or source content.

Advantageously, said one or more processors is operable to dynamically adapt one or more of said three dimensional color components of at least a portion of said static or moving image.

Advantageously, said one or more processors is operable to, one or more of:
determine a distribution of saturation levels for a specified hue and/or range of hues spanning a range of one or more luma levels within all of and/or a portion of said static and/or moving image;
determine a distribution of hues for a specified saturation level and/or range of saturation levels spanning a range of one or more luma levels within all of and/or a portion of said static and/or moving image; and
determine a distribution of luma levels within all of and/or a portion of said static and/or moving image.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram that illustrates an exemplary video system that comprises a dynamic three dimensional color management module, in accordance with an embodiment of the invention.

FIG. 1B is a block diagram illustrating an exemplary dynamic three-dimensional color management system, in accordance with an embodiment of the invention.

FIG. 2A is a block diagram illustrating an exemplary three-dimensional color statistics module, in accordance with an embodiment of the invention.

FIG. 2B is a block diagram illustrating an exemplary visualization of a three-dimensional saturation histogram, in accordance with an embodiment of the invention.

FIG. 2C is a block diagram illustrating an exemplary visualization of a three-dimensional hue histogram, in accordance with an embodiment of the invention.

FIG. 2D is a block diagram illustrating an exemplary three-dimensional dynamic color remapping module, in accordance with an embodiment of the invention.

FIG. 3 is a flow chart illustrating exemplary steps for implementing dynamic three-dimensional color management, in accordance with an embodiment of the invention.

### DETAILED DESCRIPTION OF THE INVENTION

Certain embodiments of the invention can be found in a method and system for scene adaptive dynamic 3-D color management. A video processing system may be operable to determine a scene that may be associated with a static or moving image. The video processing system may be operable to adaptively adjust one or more of three dimensional color components of the static or moving image based on the determined scene. In this regard, the three dimensional color components may comprise luma, hue and/or saturation. The video processing system may collect three dimensional color components statistics for at least a portion of the static or moving image and may determine source content and/or scene type for at least a portion of the static and/or moving image based on the statistics. In some instances, the source content and/or scene type may be determined based on coded and/or textual information that may be embedded in the static or moving image. In various embodiments of the invention, configuration parameters may be adapted for processing at least a portion of the static or moving image. The configuration parameters may be adapted based on one or more of the three dimensional color components statistics. Furthermore, configuration parameters may be adapted based on knowledge of scene type and/or source content of the static or moving image. Hues, saturation levels and/or luma levels may be adjusted based on one or more three dimensional color components statistics, scene type and/or source content. In this regard, one or more of the three dimensional color components may be dynamically adapted for at least a portion of the static or moving image. In addition, the video processing system may determine a distribution of saturation levels for a specified hue and/or range of hues wherein the hues may span a range of one or more luma levels within all of and/or a portion of the static and/or moving image. Also, a distribution of hues may be determined for a specified saturation level and/or range of saturation levels wherein the saturation levels may span a range of one or more luma levels within all of and/or a portion of the static and/or moving image.

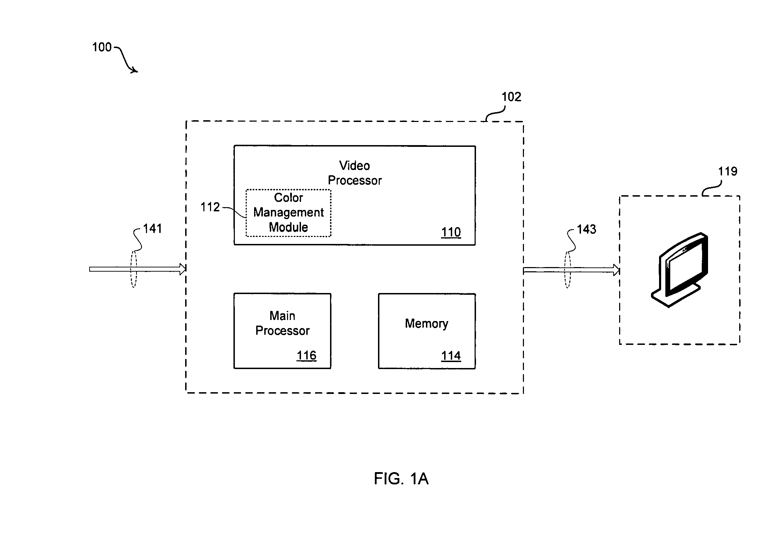

FIG. 1A is a block diagram that illustrates an exemplary video system that comprises a dynamic three dimensional color management module, in accordance with an embodiment of the invention. Referring to FIG. 1A, there is shown a video system 100 comprising a processing subsystem 102, an input video stream 141, an output video stream 143, a display subsystem 119, a video processor 110, a three dimensional (3-D) color management module 112, a memory 114, and a main processor 116.

The processing subsystem 102 may comprise the video processor 110, the 3-D color management module 112, the memory 114, the main processor 116, and suitable logic, circuitry, interfaces and/or code that may enable processing of video streams and/or to generate video playback streams.

The video processor 110 may comprise suitable logic, circuitry, interfaces and/or code that may enable performing video processing operations, including, for example color management operations, which may be performed via the 3-D color management module 112. The video processor 110 may be operable to process the input video stream 141, received via the video system 100, to enable generating the output video stream 143 for display via the display subsystem 119. The color management module 112 may comprise suitable logic, circuitry, interfaces and/or code that may enable adjusting and/or improving color dynamically in three dimensions based on analysis of statistics gathered from the video stream. The color management module 112 may be operable, for example, to facilitate 3-D color changes and/or improvements by adjusting processing parameters.

The main processor 116 may comprise suitable logic, circuitry, interfaces and/or code that enable performing main control and/or management operations in the processing subsystem 102. The main processor 116 is utilized to control at least a portion of the memory 114, the video processor 110, and/or the color management module 112. In this regard, the main processor 116 may generate, for example, at least one or more signals for controlling operations within the processing subsystem 102. The main processor 116 may also enable execution of applications that may be utilized by the processing subsystem 102.

The memory 114 may comprise suitable logic, circuitry, interfaces and/or code that may enable storage and/or retrieval of data, code and/or instructions in the processing subsystem 102. The memory 114 may be operable, for example, to queue data and/or storage of code and/or configuration data utilized during video processing operations via the processing subsystem 102.

The display subsystem 119 may comprise suitable logic, circuitry, interfaces and/or code that may enable performing display operations based on the output video stream 143, generated via the processing subsystem 110. The display subsystem 119 and the processing subsystem 110 may be integrated within a single device, for example within a television. Alternatively, the display subsystem 119 and the processing subsystem 110 may be integrated in different devices that may then be coupled to enable playback operations. For example, the display subsystem 119 may correspond to display logic in a television whilst the processing subsystem 110 may be integrated within a set-top box that may be utilized to perform dedicated video processing operations.

The input video stream 141 may comprise a data stream comprising video information. The input video stream 141 may comprise, for example, an encoded video stream which may be generated and/or communicated, for example, via television head-ends and/or audio/video playback devices. The output video stream 143 may comprise a stream of video data is that suitable for display operations via display logic, for example in the display subsystem 119.

In operation, the video system 100 may be operable to perform video display and/or playback operations, to facilitate, for example, displaying of images corresponding to video data received via the input video stream 141. The processing subsystem 102 may be operable to perform video processing operations, via the video processor 110, which may enable, for example, generation of the output video stream 143, which may be utilized to facilitate video display and/or playback operations via the display subsystem 119. The video processor 110 may be operable, for example, to process the luma and chroma signals pertaining to images that may correspond to video data received via the input video stream 141. Luma signals may represent the brightness information while the chroma signals may represent the color information. For example, in the Y'CbCr color space, the Cr and Cb parameters may correspond to color or chroma components of images and the Y' parameter may represent the brightness or luma component of the images. In the Y'CbCr color space, color may be represented as brightness and two color difference signals. Each image may be represented by a plurality of Y'CbCr encoded video pixels, each of which may be represented as a triplet (Y, Cb, Cr). The color management module 112 may receive Y'CbCr encoded video pixels and may convert the pixels to a luma, saturation and hue color space. In addition, the color management module 112 may gather three dimensional color statistical information from the converted video pixels. Video processing configuration parameters for the converted video pixels may be adapted by the color management module 112 based on the gathered statistics. Accordingly, the color management processor 112 may process the video pixels and may generate output video pixels suitable for enhanced display.

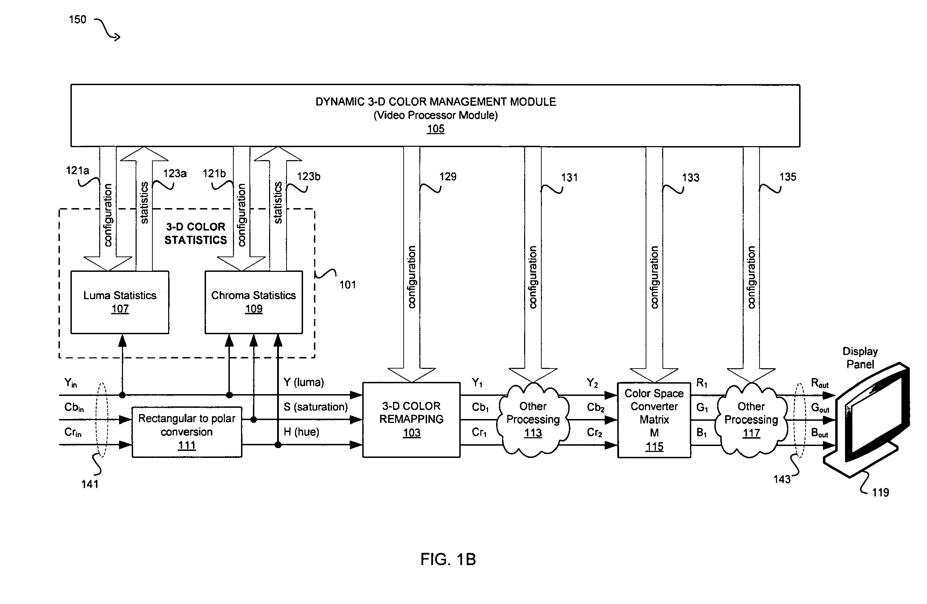

FIG. 1B is a block diagram illustrating an exemplary dynamic three-dimensional color management system, in accordance with an embodiment of the invention. Referring to FIG. 1B, there is shown a dynamic three dimensional (3-D) color management system 150 comprising a video processor module 105, a three dimensional (3-D) color statistics module 101 that may comprise a luma statistics module 107 and/or a chroma statistics module 109, a rectangular to polar conversion module 111, a three dimensional (3-D) color remapping module 103, a first processing module 113, a color space converter matrix M 115, a second processing module and a panel display 119. In addition, the color management system 150 may comprise luma statistics module parameters 121a, chroma statistics module parameters 121b, 3-D color mapping parameters 129, other processing parameters 131, color space converter matrix M parameters 133, other processing parameters 135, luma statistics 123a and chroma statistics 123b. YCbCrᵢₙ pixel data 141 and RGBₒᵤₜ pixel data 143 are also shown.

The dynamic three dimensional (3-D) color management system 150 may comprise suitable logic, circuitry and/or code that may be operable to monitor pixel data and may modify color processing of the pixel data according to the monitored information as well as according to other input such as user input. The dynamic 3-D color management system 150 may gather statistical information for three dimensions of color, for example brightness, hue and/or saturation and may modify or reconfigure color transformation processes in three dimensions based on the gathered statistics. The 3-D color transformations may be adapted and performed on a frame by frame basis and/or a sub-frame by sub-frame basis. In this regard, color mapping parameters may be varied according to various types of imagery that may be detected within one or more scenes. The dynamic 3-D color management system 150 may be part of a larger video processing chain wherein peripheral processing may comprise decoding, de-interlacing, scaling and compositing with graphics and/or other sources, for example.

A path for processing pixel data in the dynamic 3-D color management system 150 may comprise one or more of the rectangular to polar conversion module 111, the 3-D color remapping module 103, a plurality of other processing modules comprising the first other processing module 113 and the second other processing module 117, the color space converter matrix M 115, and the display 119. The video processor module 105 and the 3-D color statistics module 101 may monitor pixel data and/or control processing of pixel data within the data path. A signal input to the dynamic 3-D color management system 150, for example, pixel data input YCbCrᵢₙ 141, may be formatted in a YCbCr color space as shown in FIG. 1, however, the system may not be so limited. For example, the dynamic 3-D color management system 150 may be adapted to process pixel data of other color spaces, for example, RGB and/or HSB.

The video processor module 105 may comprise suitable logic, circuitry and/or code that may be operable to handle and/or control one or more dynamic 3-D color management processing steps. The video processor module 105 may be communicatively coupled to the 3-D color statistics module 101, the luma statistics module 107, the chroma statistics module 109, the rectangular to polar conversion module 111, the 3-D color remapping module 103, a plurality of other processing modules comprising the first other processing module 113 and/or the second other processing module 117, the color space converter matrix M 115, and the panel display 119. The video processor module 105 may receive statistics for pixel data from the 3-D color statistics module 101. The video processor module 105 may utilize pattern recognition techniques to categorize video imagery represented by the received statistics into various scene categories or scene types. Different scene types may typically present different problems and may be treated with preferably different color or image processing configurations. Scene types may comprise outdoor sports such as golf or football, various types of movie scenes, for example, interior settings, close ups of figures or faces, natural settings such as forests or sea scapes. In addition, various determined TV genre, for example, a sitcom or news may determine a preferable processing configuration.

In addition to color statistics, other sources of information may be inspected to determine a scene type or category. For example, closed captioning teletext data, other vertical blanking interval (VBI) information, user data within an MPEG video stream and/or information from an advanced video coding source may be utilized. Within a scene or type of scene, further refinements as to image content, for example detected skin tones or detected hues of outdoor greenery may be determined. Based on the collected 3-D color statistics and/or determined scene attributes, the video processor module 105 may determine parameters for configuration of one or more color processing modules that may enhance scene imagery. The processor module 105 may distribute configuration parameters and may dynamically control 3-D color management in the 3-D color management system 150. In various embodiments of the invention, the parameters may be determined for a frame of pixel data and/or for a portion of a frame of pixel data that may be received by the dynamic 3-D color processing system 150. Rates for reading statistics, determining parameters and/or distributing parameters may be varied in order to avoid unnecessary parameter changes.

The 3-D color statistics module 101 may comprise suitable logic, circuitry and/or code that may be operable to gather statistical information regarding the input signal YCbCrᵢₙ pixel data 141 and may send the statistical information to the processor module 105. The 3-D color statistics module 101 may comprise the luma statistics module 107 and the chroma statistics module 109. The luma statistics module 107 may receive statistical data for the luma component Yᵢₙ of the input signal YCbCrᵢₙ pixel data 141. The chroma statistics module 109 may receive statistical data regarding the hue and saturation components derived from the Cb and Cr components of the input signal YCbCrᵢₙ pixel data 141. The 3-D color statistics module 101, the luma statistics module 107 and the chroma statistics module 109 may receive configuration parameters from the video processor module 105 which may be determined based on luma and chroma statistical data.

The rectangular to polar conversion module 111 may comprise suitable logic circuitry and/or code that may be operable to convert the Cb and Cr components of the input signal YCbCrᵢₙ pixel data 141 that may be represented in rectangular coordinates to hue and saturation components represented in polar coordinates. In this regard, various hues and of various levels of saturation may be represented in a color wheel wherein hues vary according to a rotational angle coordinate and saturation levels of the hues vary according to a radial coordinate. For example, the hues furthest from the origin may be highly saturated and hues may become less saturated moving toward the origin. A range of hues at various saturation levels may be defined within the color wheel for a region of the wheel subtending a specified polar angle and a specified radial dimension.

The three dimensional (3-D) color remapping module 103 may comprise suitable logic, circuitry and/or code that may be operable to make adjustments to luma, hue and/or saturation in received pixel data. In this regard, the 3-D color mapping module may compute gain and/or offset adjustments of luma, hue and/or saturation. The 3-D color remapping module 103 may receive pixel data in the hue, saturation and luma color space from the rectangular to polar conversion module 111 and/or an external source and may output the pixel data in the YCbCr color space in rectangular coordinates. The 3-D color remapping module 103 may receive configuration information from the processor module 105, for example, parameters, look-up tables and/or coefficients. The parameters may be received on a frame by frame basis or at greater or smaller intervals depending on design or implementation constraints.

The other processing modules 113 and 117 may comprise suitable logic, circuitry and/or code that may be operable to perform peripheral video processing steps. For example, the other processing modules 113 and/or 117 may be operable to perform one or more of decoding, de-interlacing, scaling, sharpening and compositing with graphics. The other processing modules may receive configuration information that may be determined based on the analysis of statistics gathered by the 3-D color statistics module 101 and/or other sources. For example, the video processor module 105 may determine that a video frame or portion of a frame may comprise colors within the range of skin tones, for example, from the image of a face. In this instance, the video processor module 105 may determine that sharpening should be reduced and may send configuration parameters to the sharpening process implemented by the other processing module 113 to reduce sharpening in the frame or portion of the frame.

The color space converter matrix M 115 may comprise suitable logic, circuitry and/or code that may receive processed pixel data in one color space, for example, comprising luma, hue and saturation that may be expressed in polar coordinates. The color information may be converted to another color space, for example RGB in rectangular coordinates. The colors in RGB color space may reproduce differently in different devices. The color space converter matrix M 115 may be operable to receive configuration parameters, for example matrix coefficients from the video processor module 105. The configuration parameters may be determined based on statistical analysis of the input signal color and/or other information such as user input and/or information embedded in the video signal. The determined configuration parameters may be utilized to dynamically adjust the RGB color for a given device and/or according to user input for example.

The display 119 is described with respect to FIG. 1A.

In operation, the dynamic three dimensional (3-D) color management system 150 may receive a signal comprising a stream of video data, for example, YCbCrᵢₙ pixel data 141. The Y component of the received signal may be received by the luma statistics module 107 of the 3-D color statistics module 101. The CbCr component of the input signal may be read by the rectangular to polar conversion module 111 and may be converted to a hue (H) and saturation (S) color space in polar coordinates. The Y component of the received signal YCbCrᵢₙ pixel data 141 and the H and S components of the signal output from the rectangular to polar conversion module 111 may be received by the chroma statistics module 109 of the 3-D color statistics module 101. The luma statistics module 107 and/or the chroma statistics module 109 may sample the hue, saturation and brightness attributes of the video stream on a frame by frame basis. In various embodiments of the invention, portions of a frame such as a field or a region or window within a frame may be sampled.

The luma statistics module 107 and/or the chroma statistics module 109 processor module 105 may receive the distribution properties of luminance (luma) and/or chrominance (chroma) in the sampled pixel data. The video processor module 105 may determine scene type and/or source content, for example, types of imagery from the received statistical information and/or from other sources of scene information. The video processor 105 may determine configuration parameters for one or more video processing stages and distribute the parameters based on the scene type and/or content of the source imagery. For example, the luma parameters 121 a and/or chroma parameters may be sent to the luma statistics module 107 and chroma statistics module 109 respectively. Furthermore, the video stream may be processed by various processing stages comprising the 3-D color remapping module 103, the other processing modules 113 and/or 117 and/or the color space converter matrix M 115. In this regard, the various processing stages may be configured based on the image content analysis of the color attributes and/or information about a scene or image of the currently processed video signal. The video stream may be converted to the RGB color space and displayed on the display 119. In this manner the video may be displayed with improved color and image quality.

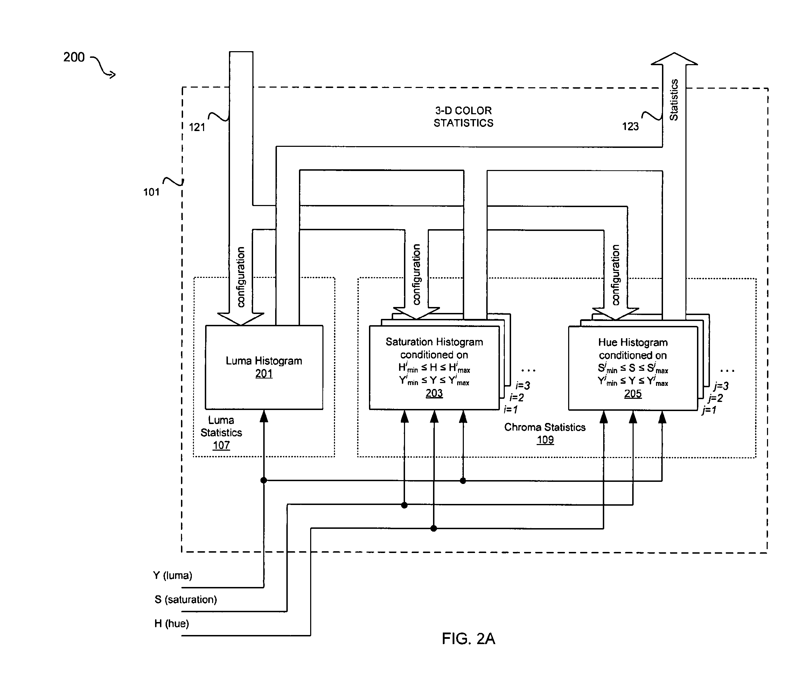

FIG. 2A is a block diagram illustrating an exemplary three-dimensional color statistics module, in accordance with an embodiment of the invention. Referring to FIG. 2A, there is shown a dynamic 3-D color management system 200 comprising the 3-D color statistics module 101, the luma and chroma statistics 123, the luma and chroma parameters 121, the luma statistics module 107 comprising the luma histogram 201, the chroma statistics module 109 comprising the saturation histogram 203 and the hue histogram 205.

The 3-D color statistics module 101, the luma and chroma statistics 123, the luma and chroma parameters 121, the luma statistics module 107 and the chroma statistics module 109 were described with respect to FIG. 1B.

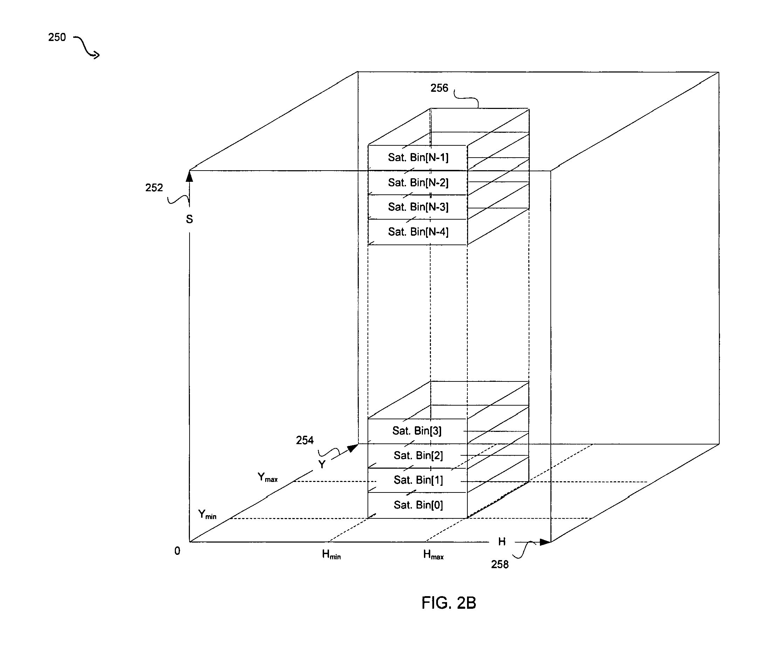

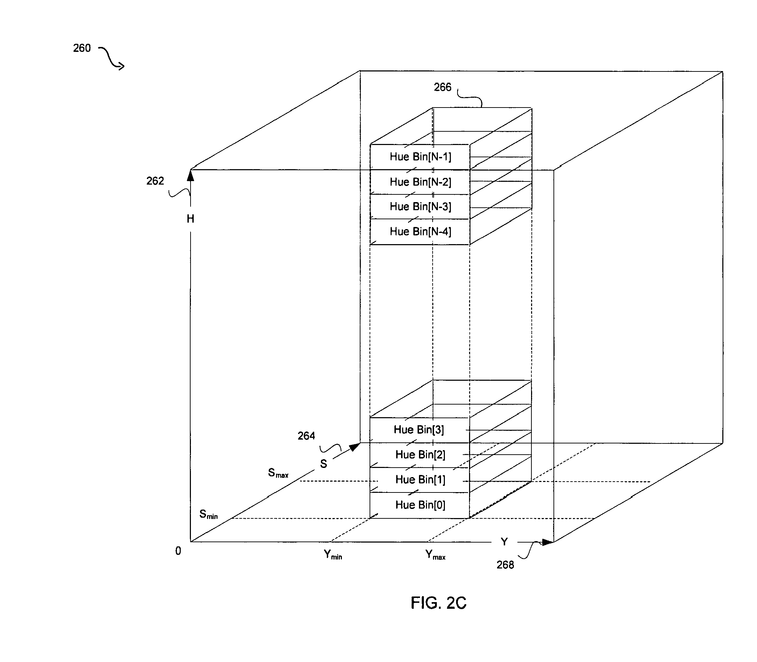

The luma histogram 201, the saturation histogram 203 and the hue histogram 205 may each provide information about video pixel or sub-pixel data. For example, pixel data from a video frame, field or a selectable region or window within a frame or field may be may be sampled for luma, hue and/or saturation. The luma histogram 201 may generate a distribution of luma levels from the sampled pixel data. The saturation histogram 203 may generate a plurality of saturation histograms wherein ones of a saturation histogram (i=1,2,3...) may comprise a distribution of saturation levels (i) for a range of hues (Hⁱₘᵢₙ to Hⁱₘₐₓ) and a range of luma levels (Yⁱₘᵢₙ to Yⁱₘₐₓ). For example, Hⁱₘᵢₙ to Hⁱₘₐₓ may specify a range of hues from the color wheel. Each saturation histogram may provide a count of pixels for a given saturation level for a range of hues and a range of luma levels. FIG. 2B comprises a visual depiction of a 3-D saturation histogram). The hue histogram 205 may generate a plurality of hue histograms (*j*=1,2,3...) wherein ones of a hue histogram may comprise a distribution of hue counts for a range of saturation levels (S^{j}ₘᵢₙ to S^{j}ₘₐₓ) and a range of luma levels (Y^{j}ₘᵢₙ to Y^{j}ₘₐₓ). Each hue histogram may provide a count of pixels comprising a specified hue for a range of saturation levels and a range of luma levels. FIG. 2C comprises a visual depiction of a three dimensional hue histogram.

In operation, the 3-D color statistics module 101, may receive a frame or portion of a frame of pixel data. The luma statistics module 107 may sample the luma components of the pixel data and may generate the luma histogram 201. The chroma statistics module 109 may sample the saturation and hue components of the received frame or portion of a frame and may generate the saturation histogram 203 and the hue histogram 205. The 3-D color statistics module 101 may distribute the luma and chroma statistics 123 to the video processor module 105. The video processor module 105 may determine the luma and chroma parameters 121 based on the received luma and chroma statistics and may distribute the luma and chroma parameters 121 to the 3-D color statistics module 101. The 3-D color statistics module 101 may be cost effectively implemented in hardware and may be operable to simultaneously generate a plurality of histograms for a given set of pixel data.

In an exemplary embodiment of the invention, the video processor module 105 may be operable to determine statistical information, for example, minimum, maximum, mean, median, variance or percentile about luma, hue and/or saturation levels. For example, a mean saturation level for a range of hues indicating a skin tone may be determined and the saturation level may be reduced in instances when it may be high. In this regard, the 3-D color statistics module 101 may indicate how bright or dim an image may be. It may indicate that an image is too highly saturated or not saturated enough. In addition, it may indicate how warm or cool colors of an image are.

FIG. 2B is a block diagram illustrating an exemplary visualization of a three-dimensional saturation histogram, in accordance with an embodiment of the invention. Referring to FIG. 2B, there is shown a 3-D saturation histogram 250 comprising an H axis 258, a Y axis 254 and an S axis 252. Also, there is shown a stack of saturation bins 256.

The 3-D saturation histogram 250 comprises a visual depiction of the 3-D saturation histogram 203 shown in FIG. 2A. The H axis 258 comprises a range of hues and the Y axis 254 comprises a range of luma levels. A plane defined by the H axis 258 and Y axis represent of grid of varying hues at varying luma levels. The stack of saturation bins 256 may comprise counts for a range of saturation levels for over a specified range of hues and luma levels. In various embodiments of the invention, there may be a plurality (*i*=1,2,3...) of overlapping or non-overlapping bin stacks over the H,Y plane based on varying minimum and/or maximum values for the specified ranges of H and Y.

FIG. 2C is a block diagram illustrating an exemplary visualization of a three-dimensional hue histogram, in accordance with an embodiment of the invention. Referring to FIG. 2C, there is shown a 3-D hue histogram 260 comprising a Y axis 268, a S axis 264 and an H axis 262. Also, there is shown a stack of hue bins 266.

The 3-D hue histogram 260 comprises a visual depiction of the 3-D hue histogram 205 shown in FIG. 2A. The Y axis 268 comprises a range of luma levels and the S axis 264 comprises a range of saturation levels. A plane defined by the Y axis 268 and S axis 264 represent of grid of varying luma levels and varying saturation levels. The stack of hue bins 266 may comprise counts for a range of hues and for a specified range of luma levels and saturation levels. In various embodiments of the invention, there may be a plurality (*j*=1,2,3...) of overlapping or non-overlapping bin stacks over the Y, S plane based on varying minimum and/or maximum values for the specified ranges of Y and S.

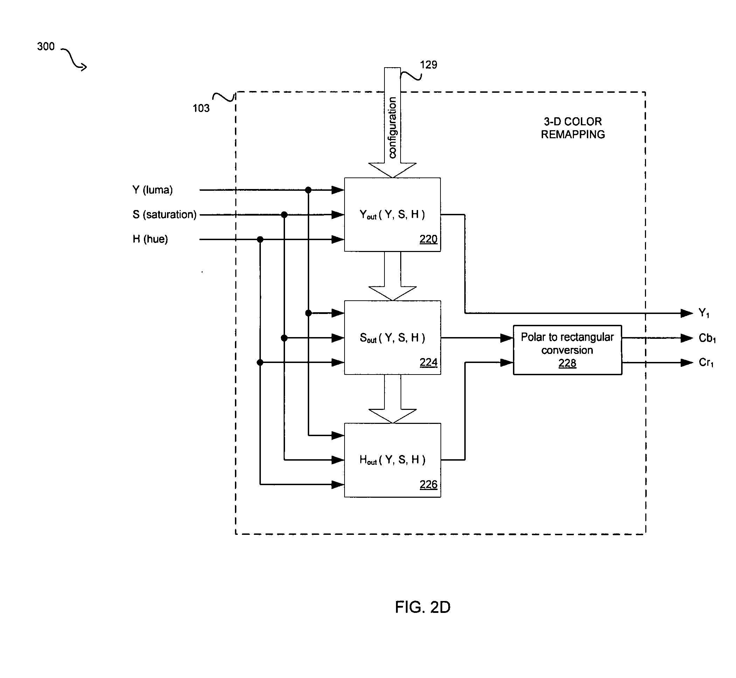

FIG. 2D is a block diagram illustrating an exemplary three-dimensional dynamic color remapping module, in accordance with an embodiment of the invention. Referring to FIG. 2D, there is shown the color management system 300 comprising the 3-D color remapping module 103. a Yₒᵤₜ module 220, a Sₒᵤₜ module 224 and an Hₒᵤₜ module 226, a polar to rectangular conversion module 228 and the configuration parameters 129.

The three dimensional (3-D) color remapping module 103 may comprise suitable logic, circuitry and/or code that may be operable to make adjustments to luma, hue and/or saturation gain and/or offsets based on three dimensional color regions in received pixel data.

The 3-D color mapping module may comprise three one dimensional modules, the Yₒᵤₜ module 220, the Sₒᵤₜ module 224 and the Hₒᵤₜ module 226. The three one dimensional modules may comprise suitable logic, circuitry and/or code to compute gain and/or offset adjustments for one of luma, saturation and/or hue respectively. The one dimensional modules may receive pixel data expressed in the hue, saturation and luma color space. The output of the Sₒᵤₜ module 224 and the Hₒᵤₜ module 226 may be sent to the polar to rectangular conversion module 228 which may convert the signals to the Cb and Cr color space in rectangular coordinates.

The 3-D color remapping module 103 may receive configuration parameters 129 from the video processor module 105, for example, parameters, look-up tables and/or coefficients. The parameters may be determined by the video processor 105 based on analysis of the color statistics gathered from the received pixel data.

In operation, the 3-D color remapping module 103 may receive pixel data in the hue, saturation and luma color space and may adjust gains and offsets in the one dimensional modules Yₒᵤₜ module 220, the Sₒᵤₜ module 224 and the Hₒᵤₜ module 226. The output of the Sₒᵤₜ module 224 and the Hₒᵤₜ module 226 may be converted to the YCbCr color space in rectangular coordinates by the polar to rectangular conversion module 228. The 3-D color remapping module 103 may receive configuration information from the video processor module 105, for example, parameters, look-up tables and/or coefficients. The parameters determined by the video processor 105 based on analysis of the color statistics gathered from the received pixel data. In this manner, color remapping may be cost effectively implemented in hardware.

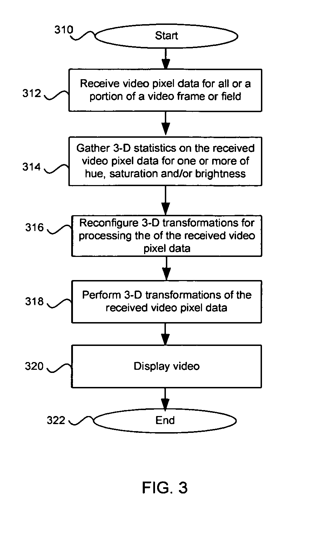

FIG. 3 is a flow chart illustrating exemplary steps for implementing dynamic three-dimensional color management, in accordance with an embodiment of the invention. The exemplary steps may begin with start step 310. In step 312, the dynamic 3-D color management system 150 may receive video pixel data 141 comprising all or a portion of a video frame or field. In step 314, the 3-D color statistics module 101 may gather 3-D statistics on the received video pixel data 141 for one or more of hue, saturation and/or brightness. In step 316, the video processing module 105 may reconfigure 3-D transformations for processing the of the received video pixel data 141 in one or more of the luma statistics module 107, the chroma statistics module 109, the 3-D color remapping module 103, the processing modules 113 and/or 117 and/or the color space converter matrix M 115. In step 318, the 3-D color remapping module 103, the processing modules 113 and/or 117 and/or the color space converter matrix M 115 may perform 3-D transformations of the received video pixel data 141. In step 320, the display 119 may display the output video signal 143. Step 322 may be an end of exemplary steps.

In an embodiment of the invention, a video processing system 150 may be operable to determine a scene that may be associated with a static or moving image, for example, an image within the YCbCrᵢₙ pixel data 141. The video processing system may be operable to adaptively adjust one or more of three dimensional color components of the static or moving image based on the determined scene. In this regard, the three dimensional color components may comprise luma, hue and/or saturation. The video processing system may collect three dimensional color components statistics for at least a portion of the static or moving image and may determine source content and/or scene type for at least a portion of the static and/or moving image based on the statistics. In some instances, the source content and/or scene type may be determined based on coded and/or textual information that may be embedded in the static or moving image. In various embodiments of the invention, configuration parameters, for example, 121 a, 121b, 129, 131, 133 and/or 135 may be adapted for processing of at least a portion of the static or moving image. The configuration parameters may be adapted based on one or more of the three dimensional color components statistics. Furthermore, the configuration parameters may be adapted based on knowledge of scene type and/or source content of the static or moving image. Hues and/or saturation levels may be adjusted based on one or more three dimensional color components statistics, for example 123a and/or 123b, scene type and/or source content. In this regard, one or more of the three dimensional color components may be dynamically adapted for at least a portion of the static or moving image, for example, by the 3-D color re-mapper 103. In addition, the video processing system may determine a distribution of saturation levels, for example in the saturation histogram 203, for a specified hue and/or range of hues wherein the hues may span a range of one or more luma levels within all of and/or a portion of the static and/or moving image. Also, a distribution of hues, for example, the hue histogram 205, may be determined for a specified saturation level and/or range of saturation levels wherein the saturation levels may span a range of one or more luma levels within all of and/or a portion of the static and/or moving image.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for scene adaptive dynamic 3-D color management.

Accordingly, the present invention may be realized in hardware, software, or a combination of hardware and software. The present invention may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video data, the method comprising:
in a video processing system:
determining a scene associated with a static or a moving image; and
adaptively adjusting one or more three dimensional color components of
said static or said moving image based on said determination.

2. The method according to claim 1, wherein said three dimensional color components comprises luma, hue and/or saturation components.

3. The method according to claim 1, comprising collecting three dimensional color components statistics for at least a portion of said static or moving image.

4. The method according to claim 3, comprising determining source content and/or scene type for at least a portion of said static or moving image based on said collected three dimensional color components statistics.

5. The method according to claim 1, comprising determining source content and/or scene type for at least a portion of said static or moving image based on coded and/or textual information embedded in said static or moving image.

6. The method according to claim 1, comprising, adapting configuration parameters for processing at least a portion of said static or moving image based on one or more three dimensional color components statistics collected for said static or moving image.

7. A system for processing video data, the system comprising:
one or more processors for use in a video processing system, wherein said one or more processors is operable to:
determine a scene associated with a static or a moving image; and
adaptively adjust one or more three dimensional color components of said static or said moving image based on said determination.

8. The system according to claim 7, wherein said three dimensional color components comprises luma, hue and/or saturation components.

9. The system according to claim 7, wherein said one or more processors is operable to collect three dimensional color components statistics for at least a portion of said static or moving image.

10. The system according to claim 9, wherein said one or more processors is operable to determine source content and/or scene type for at least a portion of said static or moving image based on said collected three dimensional color components statistics.
